# EUROPEAN PATENT APPLICATION

(11) **EP 4 593 310 A1**
(43) Date of publication of application: **30.07.2025**
(21) Application number: 24214203.2
(22) Date of filing: 20.11.2024
(51) Int. Cl.: H04J 3/06

(54) **PHASE SYNCHRONIZATION BETWEEN TIMERS**

(30) Priority: 29.01.2024 US 202418426209
(71) Applicant: INTEL Corporation, Santa Clara, CA 95054 (US)
(72) Inventor: BORDOGNA, Mark, Santa Clara, 95054 (US); FODOR, Zoltan, Santa Clara, 95054 (US)
(74) Representative: Rummler, Felix

(57) **Abstract**

Examples described herein relate to a first network interface controller comprising a first network interface, first timer, and a first signal transceiver and circuitry to reduce offset between the first timer of the first network interface controller and a second timer of a second network interface controller. The circuitry to reduce offset between the first timer of the first network interface controller and a second timer of a second network interface controller based on a first signal transmitted over a communication line from the first signal transceiver to the second network interface controller and also based on the first signal transmitted from the second network interface controller back to the first network interface controller over the communication line.

## Description

### BACKGROUND

For distributed processing of data by nodes in a distributed cluster, nodes are to be time synchronized. Timestamp exchange between the nodes can be used to achieve time synchronization. Timestamp accuracy can be used to establish network quality of service (QoS) and drive workload placement on nodes. For example, Radio Access Networks (RANs) have stringent requirements on Time Transmit Intervals (TTI) for time synchronization. For example, in 4G/5G applications, radio frames are sent to antennas every 10 milliseconds (ms) and base stations are synchronized and are to meet timing standards by a time alignment of within +/-50 parts per billion (ppb) and 1.5 microsecond (µsec).

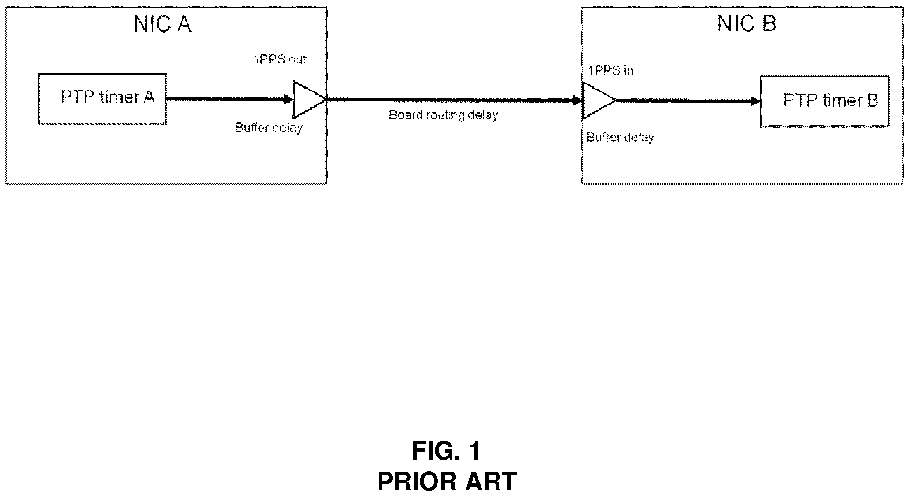

FIG. 1 depicts an example of a prior art measurement of board routing delay. To phase align timing signals of network interface controllers (NICs) A and B, Precision Time Protocol (PTP) timer A of NIC A transmits a one pulse per second (1PPS) signal to NIC B. Based on the 1PPS signal, PTP timer B adjusts a frequency and/or phase of a timing signal generated by PTP timer B to attempt to synchronize PTP timer B with PTP timer A. For example, differences in phases between timing signals of PTP timer A and PTP timer B can be based on output and input buffers, internal routing delays, and board routing delay variation. Lab measurements have shown that this approach can yield time difference errors in the 10nanosecond (ns) range whereby time stamps of NIC B are 10ns delayed from time stamps of NIC A. Such errors would prevent a deployment that complies with International Telecommunication Union (ITU) 8273.2 (2017) Class D. In order to meet Class D timing for Radio Access Networks (RANs), time stamps of devices are to be aligned within 1-2 nanoseconds (ns) in order to meet the overall ITU node specification of 5ns. As a service moves from Class D to a higher error deployment of Class C and then Class B, the number of nodes in a path decreases, which can increase retiming nodes in the network. Therefore, deployment costs rise. Meeting Class D allows a service provider to deploy a wide area network (WAN) with fewer retiming nodes in paths.

### BRIEF DESCRIPTION OF THE DRAWINGS

FIG. 1 shows an example prior art system.
FIG. 2 shows an example system.
FIG. 3A shows an example system.
FIG. 3B shows an example system.
FIG. 3C depicts an example timestamp value.
FIG. 4 shows an example system.
FIG. 5 depicts an example process.
FIGs. 6A and 6B depict example network interface devices.
FIG. 7 depicts an example system.

### DETAILED DESCRIPTION

Examples described herein can synchronize time counters between two or more devices on a platform or on different platforms. Devices can include: network interface devices, accelerators, processors, memory devices, storage devices, input/output devices, or other devices. A device can be implemented in a chip, chiplet, system on chip (SoC), integrated circuit, circuit board with connected circuits that communicate by routing media, or others. A first device can transmit a timing signal to a second device using a bi-directional communication medium and the second device can transmit the timing signal back to the first device. The bi-directional communication medium can provide for full duplex communications or multiple communication media where a first communication media provides full or half duplex communication and a second communication medium provides full or half duplex communication. Round trip time measurement of the timing signal can be used to predict one-way delay from the first device to the second device. Circuitry or processor-executed software can synchronize timing signals at the first and second devices based on symmetric delays determined from a bi-directionally transmitted timing signal.

Timing signal synchronization can occur at system start-up, system reset, periodically thereafter, during debug mode, outside of debug mode (e.g., during data transfer or in-service), or other times. The first device can transmit the timing signal to the second device via the bi-directional communication medium. The second device can receive the timing signal and transmit the timing signal back to the first device. Time stamp T1 can be measured when the first device transmits the timing signal to the second device, time stamp T2 can be measured when the second device receives the timing signal, time stamp T3 can be measured when the second device transmits the timing signal back to the first device, and time stamp T4 can be measured when the first device receives the timing signal from the second device. Based on an average of the time for the timing signal to traverse from the first device to the second device and the time for the timing signal to traverse from the second device to the first device, an offset between timing signals of the first device and timing signals of the second device can be determined. The offset can be used to increase (or decrease) the timing signals of the second device to synchronize the timing signals of the second device to those of the first device. Reduction of offset between two devices can improve accuracy of time stamp synchronization between the first and second devices. The offset can be used to account for delays arising from fixed and static causes, dynamic delays (e.g., clock crossings), output and input buffers, internal routing delays, board routing delay variation, delay of counter to counter path, or others.

Examples can improve accuracy of timestamps in wireless access applications when using configurations with multiple chiplets. For example, when using two NICs or two chiplets, a first NIC can obtain network timing via Institute of Electrical and Electronics Engineers (IEEE) 1588 Precision Time Protocol (PTP), a global positioning system (GPS) signal, satellite (Global Navigation Satellite Systems (GNSS)), or other technologies. Timestamps of a second NIC can be aligned within 1-2 nanoseconds (ns) of timestamps of the first NIC in order to meet ITU 8273.2 Class D node timing for Radio Access Networks (RAN). By compliance with Class D, a number of retiming nodes in the network can be reduced to provide a lower cost solution network solution.

Examples can be applied at least in financial trading, 4G/5G RANs where the processors execute applications that are aligned with a network time, or distributed applications in cloud computing.

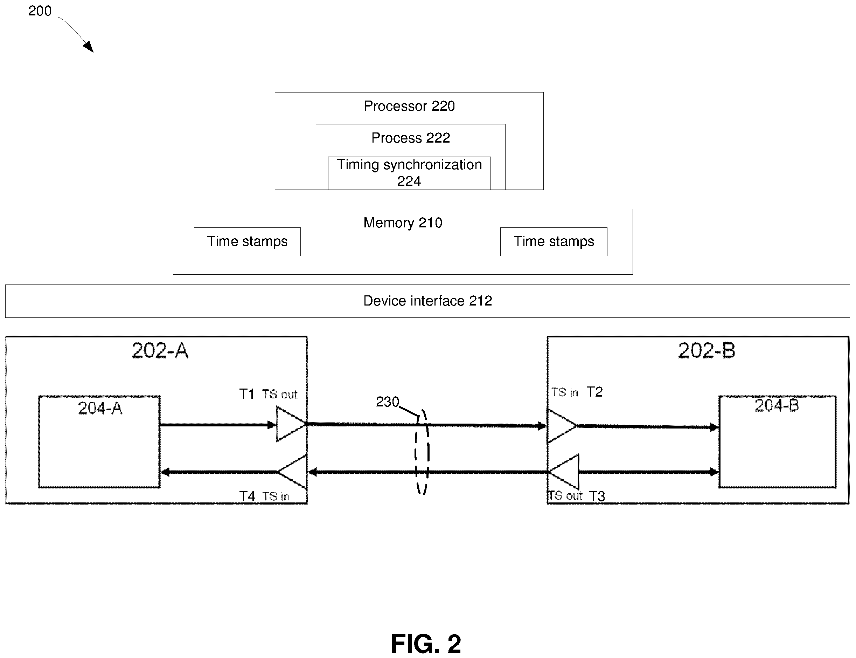

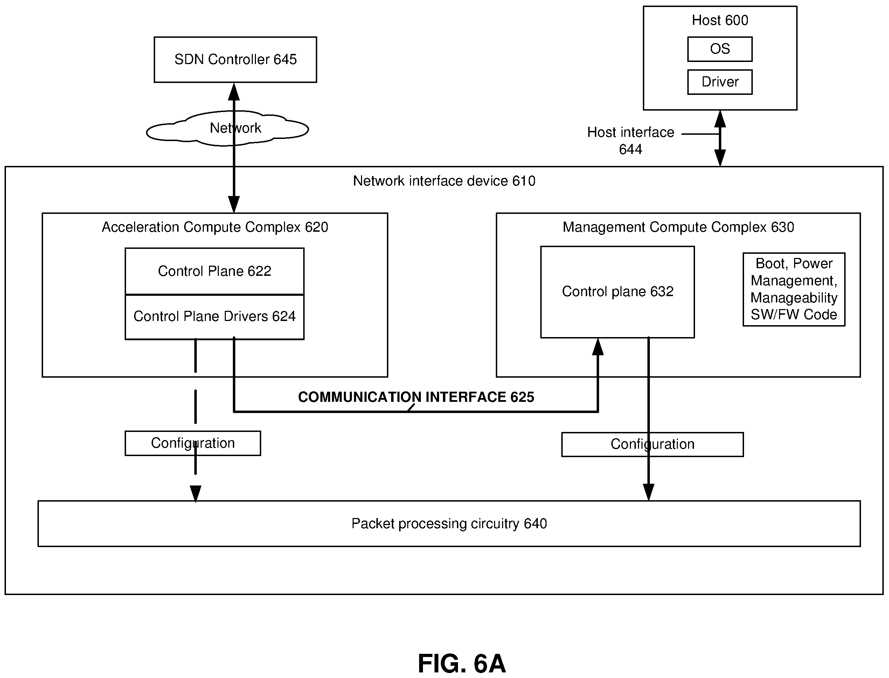

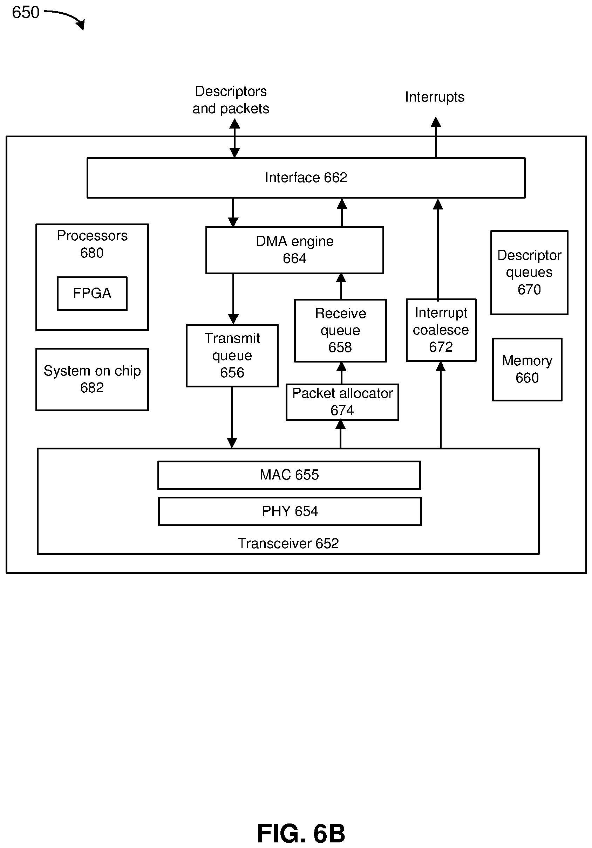

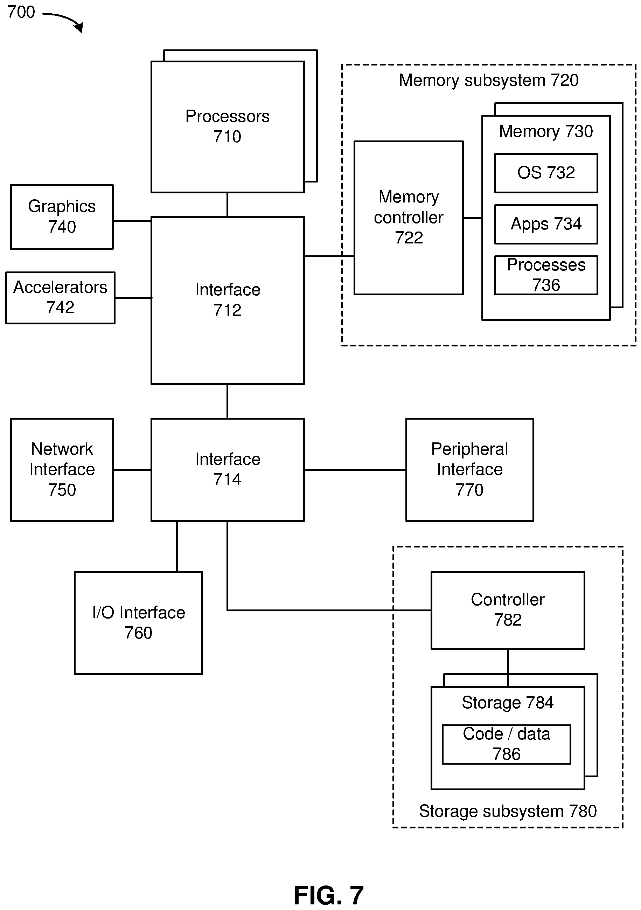

FIG. 2 depicts an example system. In some examples, system 200 can include circuitry to determine offset between timing signals of timer 204-A of device 202-A and timing signals of timer 204-B of device 202-B based on signal propagation delay from device 202-A to device 202-B and signal propagation delay from device 202-B to device 202-A. Internal board delay variation routing and buffers can have symmetric delay components. Offset can be based on symmetric delays from device 202-A to device 202-B and device 202-B to device 202-A arising at least from signal routing and buffers. Various examples of circuitry and software of system 200 of FIG. 2 can be found at least in FIG. 6A, 6B, and/or 7.

Devices 202-A and 202-B can include one or more of: a network interface device, processor, storage device, memory device, accelerator, or other circuitry. Devices 202-A and 202-B can refer to separate integrated circuits, chips, chiplets, Ethernet input/output (I/O) chiplets, circuit boards, or other circuitry.

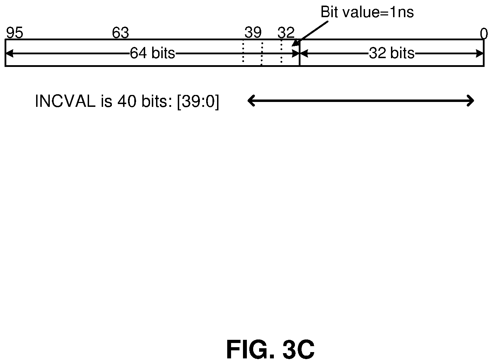

An oscillator (not shown) can output a reference clock signal and can be on-die with device 202-A or off-die from device 202-A. Timer 204-A can generate timestamps based on the reference clock signal. Timer 204-A can generate timestamps based on a clock signal, from the oscillator, synchronized to network timing in accordance with Institute of Electrical and Electronics Engineers (IEEE) 1588 Precision Time Protocol (PTP), a global positioning system (GPS) signal, or other technologies. Timestamps can be represented as multiple bits, where a resolution of timestamps of timing signals 204-A can be IEEE 1588-2008 or other higher or lower resolution. For example, a resolution or increment of timing values can be 1ns, 1.25ns, or higher or lower durations. For example, if a clock to the main timer is 800MHz, a 1-bit increment of timing values can be 1.25ns. For example, FIG. 3C depicts an example of a timestamp value of 40 bits, where a 1-bit increment represents 1ns. Other number of bits for a timestamp value can be used.

In some examples, timer 204-A and timer 204-B can include general-purpose input output (GPIO) circuitry. A single GPIO circuitry in timer 204-A can be configured so that the GPIO is setup for communication from device 202-A to device 202-B and, to receive return timing signal, the GPIO is configured to receive a timing signal communication from device 202-B.

Media 230 can provide communicative coupling of device 202-A and device 202-B. Various examples of media 230 include a bi-directional communication line that can include one or more of: an electrical or optical cable, copper coaxial cable, board routing wires, wires (e.g., one, two, three wires, or eight wires), or others.

Processor 220 and memory 210 can be communicatively coupled to device 202-A and device 202-B via device interface 212. Device interface 212 can operate in a manner consistent with interconnect standards and device interfaces, described herein.

Processor 220 can execute process 222. Process 222 can include one or more of: an operating system (OS), device driver, virtual machine (VM), microservice, or other software. In some examples, process 222 can perform timing synchronization 224 to synchronize timestamps of timer 204-B with timestamps of timer 204-A based on measured symmetric delay of media 230 or adjust a frequency or phase of timer 204-B. In some examples, timing synchronization 224 can be based on Linux^{®} ts2phc. In some examples, timing synchronization 224 can call APIs, such as get_time to access timestamps of timing signal transmission and receipt (e.g., T1, T2, T3, and T4).

In some examples, if device 202-A and 202-B are coupled to different circuit boards in a rack or data center and media 230 includes a cable (e.g., copper coaxial cable), and processor 220 is part of a server coupled via device interface 212 to device 202-A, processor 220 can access T2 and T3 by querying device 202-B or receiving T2 and T3 from device 202-B by device 202-B pushing or transmitting T2 and T3 to processor 220 or memory 210, periodically.

For example, timing synchronization 224 can cause device 202-A to transmit a timing signal from timer 204-A via media 230 to device 202-B. Timing signal can be 1PPS, or other frequency of signal. As described herein, a frequency of timing signal can vary depending on a phase of use. If main timer of timer 204-A is time value T1, when the 1PPS is sent, and it takes an amount of time to propagate to device 202-B over media 230. At time T2, as measured by timer 204-B, device 202-B receives the timing signal. At time T3, as measured by timer 204-B, timer 204-B sends the timing signal back to device 202-A. At time T4, as measured by timer 204-A, timer 204-A receives the timing signal from device 202-B. Times T1, T2, T3, and T4 can be captured in a register or memory 210 for access by timing synchronization 224.

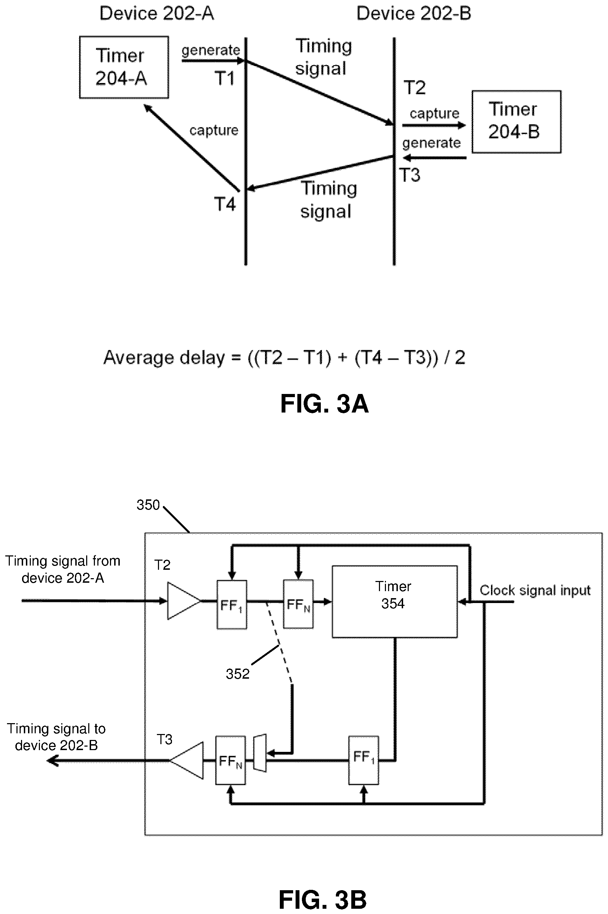

Timing synchronization 224 can determine delay of media 230 and other circuitry of timer 204-A and 204-B based on times T1, T2, T3, and T4. For example, as depicted in FIG. 3A, offset between timestamps of timer 204-A and timestamps of timer 204-B can be based on an average of T2-T1 and T4-T3. For example, if an average of T2-T1 and T4-T3 to propagate between devices 202-A and 202-B over media 230 is 20ns, timing synchronization 224 can increase timestamps of timer 204-B by 20ns.

For example, if T2≤T1 and/or T3≤T4, then timing synchronization 224 can adjust timestamps of timer 204-B by adding an absolute value of the offset to a timestamp value, increasing a current timestamp value, and/or cause a clock signal from a phase lock loop (PLL) to run faster for a time then return to regular speed, by use of a Proportional and Integral (PI) controller, as described herein.

For example, if T1<T2 and/or T4<T3, timing synchronization 224 can adjust timestamps of timer 204-B by running a clock signal from a PLL slower for a time then return to regular speed, by use of a PI controller, as described herein, or add a negative number (e.g., offset) to a timestamp.

Timing synchronization 224 can change offset, change current timestamp value, and/or clock after multiple samples. For example, timing synchronization 224 can adjust frequency in order to synchronize timestamps as follows. At (1), based on T1, T2, T3, and T4, determine that the delay in the path from A to B is 20ns (T1=30, T2=50, T3=100, T4=120). At (2), timing synchronization 224 can determine Node B is to advance its counter by 20ns. At (3), timing synchronization 224 can determine if Node B needs to advance by 20ns, then the following can be done (where Node B has a timer that runs at 1GHz (1ns per clock period): (a) Node B's clock can be updated to 1.001ns per clock tick by adjusting the phase lock loop (PLL) that generates the clock; (b) after 1000 ticks node B gains 1ns and after 20,000 ticks, gains 20ns; and (c) if the Node B Timer is at a value of X, when the timer hits a value of X + 20,000, change the frequency back to 1.000GHz.

Timing synchronization 224 can adjust frequency in order to synchronize timestamps as follows. At (1), based on T1, T2, T3, and T4, determine that the delay in the path from A to B is 20ns (T1=30, T2=50, T3=100, T4=120). At (2), timing synchronization 224 can determine Node B is to advance its counter by 20ns. At (3), timing synchronization 224 can (a), update increment rate of Node B's timer from 1ns per tick to 1.001ns per clock tick so that after 1,000 clock ticks node B gains 1ns and after 20,000 clock ticks, node B gains 20ns, and (b) if the Node B Timer is at a value of X, when the timer hits a value of X + 20,000, then change the increment value back to 1ns per clock tick.

Note that while a single example of determination of T1, T2, T3, and T4 is described, multiple determinations of T1, T2, T3, and T4 can be made to generate a data set and based on the data set, timing synchronization 224 can adjust clock frequency or timestamp values. For example, timing synchronization 224 can trim outliers in the data set to remove one or more groups of T1, T2, T3, T4 based on being a standard deviation or other amount away from an average value of T1, T2, T3, T4. Based on the remaining groups of T1, T2, T3, T4, timing synchronization 224 can determine an offset value to adjust clock frequency or timestamp values from determining a mean of offset values, a median of offset values, or an average of offset values.

Timing synchronization 224 can determine delay or offset at start-up of system 200 or processor 220, restart of system 200 or processor 220, during a debug mode, periodically, at connection of device 204-B to system 200, at a request of an administrator, device driver, operating system (OS) or orchestrator, at a failover from another device (e.g., a network interface device) to use of device 204-B, or other times. Based on the offset, timing synchronization 224 can adjust a frequency and/or phase of timer 204-B.

In some examples, for an initial or calibration phase, a frequency of timing signal can be 1PPS or a higher frequency than 1PPS. In some examples, after an initial or calibration phase, and after an offset is applied to a timer or when the offset does not change more than a configured percentage level among successive determinations of offsets, a frequency of timing signal can be 1PPS or a lower frequency than 1PPS to reduce a frequency of determination of offsets. However, the frequency of the timing signal can be increased where a determined offset is detected to increase by timing synchronization 224.

While examples are shown for two devices, a device can determine offset operations with two or more other device. For example, device 204-B can perform synchronization with device 204-C (not shown), in a similar manner as described herein between device 204-A and 204-B.

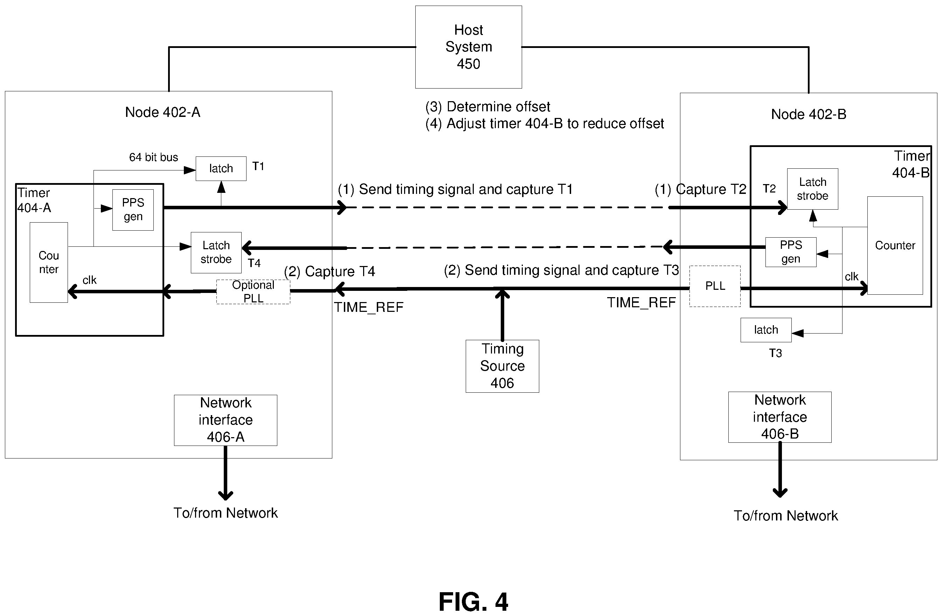

FIG. 3B depicts an example timer system. Timer system 350 can be used by device 202-A and/or 202-B. Timing synchronization 224 can cause timer system 350 to re-direct a received timing signal at device 202-B from device 202-A for transmission back to device 202-A via circuitry 352. As discussed herein, signal propagation delays can arise from propagation over media 230, from flip flops (FF), and buffers. Measurement of timestamp T2 can occur at receipt of timing signal at device 202-B based on timestamps generated based on timer 354. Measurement of timestamp T3 can occur at transmission of timing signal to device 202-A based on timestamps generated based on timer 354. For example, as depicted in FIG. 4, a latch with a strobe can capture an output of timer 354 so that when the strobe is activated, the content of timer 354 is stored in the latch.

In some examples, instead of device 202-B re-directing a received timing signal to device 202-A, timing synchronization 224 can cause device 202-A to transmit a timing signal to device 202-B and measurements can be taken for T1* and T2*. In addition, timing synchronization 224 can cause device 202-B to transmit a timing signal to device 202-A and measurements can be taken for T3* and T4*. Timing synchronization 224 can determine an average of T2*-T1* and T4*-T3* to adjust timestamps utilized by device 202-B or otherwise adjust a frequency or phase of a clock signal utilized by timer 204-B.

FIG. 4 depicts an example system. Communications from node 402-A to node 402-B and from node 402-B to node 402-A can experience delays that are symmetric (including clock crossing) so that clock domains of nodes 402-A and 402-B exhibit a fixed phase relationship or offset. Node 402-A and/or 402-B can include circuitry of a device (e.g., device 202-A or device 202-B).

For example, timing source 406 can access a timing signal from a crystal oscillator (XO) and timing source 406 can be synchronized to IEEE 1588 PTP, GPS, or other network signals. Timer 404-A of node 402-A can be synchronized to timing source 406. Similarly, timer 404-B of node 402-B can be synchronized to timing source 406. In some examples, timer 404-A and/or timer 404-B can include circuitry described with respect to FIG. 3B and circuitry to generate timestamps based on rising or falling edges of a clock signal.

An example operation can be as follows. At (1), node 402-A sends a timing signal to node 402-B and a latch and strobe of node 402-A captures timestamp T1 (time of transmission of the timing signal from node 402-A to node 402-B) and a latch and strobe of node 402-B captures a timestamp T2 (time of receipt of the timing signal at node 402-B). At (2), node 402-B transmits the timing signal back to node 402-A and a latch and strobe of node 402-B captures timestamp T3 (time of transmission of the 1PPS signal from node 402-B to node 402-A) and a latch and strobe of node 402-A captures timestamp T4 (time of receipt of the 1PPS signal at node 402-A). At (3), processor of host system 450 executes timing synchronization process (e.g., ts2phc) which reads T1, T2, T3, T4 from registers or memory and determines an offset. At (4), the timing synchronization process can increase or slow down clock frequency or phase of a timer of timer 404-B by adjusting a clock frequency generated by a PLL using a PI controller or adjust timestamp values from timer 404-B to reduce offset between timer of node 404-A and timer of node 404-B. The timing synchronization process can provide the phase alignment to counter mismatch such as where timers for node 402-A and node 402-B started at different start times. Mismatch between timestamps of timer 404-A and timer 404-B can occur from delays arising from output buffer of timer 404-A, input buffer at of timer 404-B, routing delay, and others.

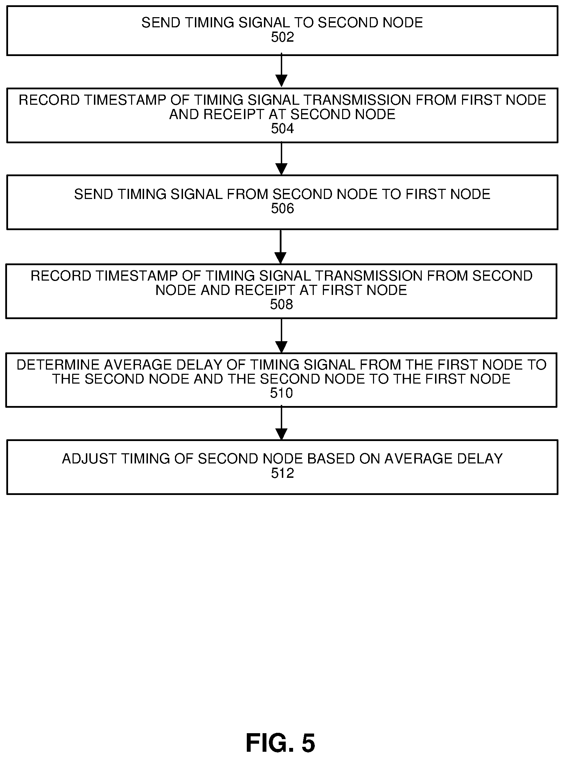

FIG. 5 depicts an example process. The process can be performed by a timing synchronization process or other circuitry. At 502, the process causes node A to send a timing signal to device B. At 504, the process causes capture of timestamp T1 (time of transmission of the timing signal from node A to node B) and T2 (time of receipt of the timing signal at node B). At 506, the process causes node B to re-transmit the timing signal back to node A. At 508, the process causes capture of timestamp T3 (time of transmission of the timing signal from node B to node A) and T4 (time of receipt of the timing signal at node A). At 510, the process determines an average delay from node A to node B and node B to node A based on timestamps T1, T2, T3, and T4. At 512, the process can increase or slow down clock frequency or phase or adjust time stamp values to reduce offset between timer of node A and timer of node B based on the average delay so that timestamps of nodes A and B are synchronized.

FIG. 6A depicts an example system. Host 600 can include processors, memory devices, device interfaces, as well as other circuitry such as described with respect to one or more of FIG. 6B, and/or 7. Processors of host 600 can execute software such as processes (e.g., applications, microservices, virtual machine (VMs), microVMs, containers, processes, threads, or other virtualized execution environments), operating system (OS), and device drivers. An OS or device driver can configure network interface device or packet processing device 610 to utilize one or more control planes to communicate with software defined networking (SDN) controller 645 via a network to configure operation of the one or more control planes. Host 600 can be coupled to network interface device 610 via a host or device interface 644.

Network interface device 610 can include multiple compute complexes, such as an Acceleration Compute Complex (ACC) 620 and Management Compute Complex (MCC) 630, as well as packet processing circuitry 640 and network interface technologies for communication with other devices via a network. ACC 620 can be implemented as one or more of: a microprocessor, processor, accelerator, field programmable gate array (FPGA), application specific integrated circuit (ASIC) or circuitry described at least with respect to FIG. 6B and/or 7. Similarly, MCC 630 can be implemented as one or more of: a microprocessor, processor, accelerator, field programmable gate array (FPGA), application specific integrated circuit (ASIC) or circuitry described at least with respect to FIG. 6B, and/or 7. In some examples, ACC 620 and MCC 630 can be implemented as separate cores in a CPU, different cores in different CPUs, different processors in a same integrated circuit, different processors in different integrated circuit. In some examples, circuitry and software of network interface device 610 can be configured to adjust timestamps to synchronize with timestamps of another device based on a bi-directionally transmitted timing signal, as described herein.

Network interface device 610 can be implemented as one or more of: a microprocessor, processor, accelerator, field programmable gate array (FPGA), application specific integrated circuit (ASIC) or circuitry described at least with respect to FIG. 6B and/or 7. Packet processing pipeline circuitry 640 can process packets as directed or configured by one or more control planes executed by multiple compute complexes. In some examples, ACC 620 and MCC 630 can execute respective control planes 622 and 632.

SDN controller 645 can upgrade or reconfigure software executing on ACC 620 (e.g., control plane 622 and/or control plane 632) through contents of packets received through packet processing device 610. In some examples, ACC 620 can execute control plane operating system (OS) (e.g., Linux) and/or a control plane application 622 (e.g., user space or kernel modules) used by SDN controller 645 to configure operation of packet processing pipeline 640. Control plane application 622 can incude Generic Flow Tables (GFT), ESXi, NSX, Kubernetes control plane software, application software for managing crypto configurations, Programming Protocol-independent Packet Processors (P4) runtime daemon, target specific daemon, Container Storage Interface (CSI) agents, or remote direct memory access (RDMA) configuration agents.

In some examples, SDN controller 645 can communicate with ACC 620 using a remote procedure call (RPC) such as Google remote procedure call (gRPC) or other service and ACC 620 can convert the request to target specific protocol buffer (protobuf) request to MCC 630. gRPC is a remote procedure call solution based on data packets sent between a client and a server. Although gRPC is an example, other communication schemes can be used such as, but not limited to, Java Remote Method Invocation, Modula-3, RPyC, Distributed Ruby, Erlang, Elixir, Action Message Format, Remote Function Call, Open Network Computing RPC, JSON-RPC, and so forth.

In some examples, SDN controller 645 can provide packet processing rules for performance by ACC 620. For example, ACC 620 can program table rules (e.g., header field match and corresponding action) applied by packet processing pipeline circuitry 640 based on change in policy and changes in VMs, containers, microservices, applications, or other processes. ACC 620 can be configured to provide network policy as flow cache rules into a table to configure operation of packet processing pipeline 640. For example, the ACC-executed control plane application 622 can configure rule tables applied by packet processing pipeline circuitry 640 with rules to define a traffic destination based on packet type and content. ACC 620 can program table rules (e.g., match-action) into memory accessible to packet processing pipeline circuitry 640 based on change in policy and changes in VMs.

For example, ACC 620 can execute a virtual switch such as vSwitch or Open vSwitch (OVS), Stratum, or Vector Packet Processing (VPP) that provides communications between virtual machines executed by host 600 or with other devices connected to a network. For example, ACC 620 can configure packet processing pipeline circuitry 640 as to which VM is to receive traffic and what kind of traffic a VM can transmit. For example, packet processing pipeline circuitry 640 can execute a virtual switch such as vSwitch or Open vSwitch that provides communications between virtual machines executed by host 600 and packet processing device 610.

MCC 630 can execute a host management control plane, global resource manager, and perform hardware registers configuration. Control plane 632 executed by MCC 630 can perform provisioning and configuration of packet processing circuitry 640. For example, a VM executing on host 600 can utilize packet processing device 610 to receive or transmit packet traffic. MCC 630 can execute boot, power, management, and manageability software (SW) or firmware (FW) code to boot and initialize the packet processing device 610, manage the device power consumption, provide connectivity to a management controller (e.g., Baseboard Management Controller (BMC)), and other operations.

One or both control planes of ACC 620 and MCC 630 can define traffic routing table content and network topology applied by packet processing circuitry 640 to select a path of a packet in a network to a next hop or to a destination network-connected device. For example, a VM executing on host 600 can utilize packet processing device 610 to receive or transmit packet traffic.

ACC 620 can execute control plane drivers to communicate with MCC 630. At least to provide a configuration and provisioning interface between control planes 622 and 632, communication interface 625 can provide control-plane-to-control plane communications. Control plane 632 can perform a gatekeeper operation for configuration of shared resources. For example, via communication interface 625, ACC control plane 622 can communicate with control plane 632 to perform one or more of: determine hardware capabilities, access the data plane configuration, reserve hardware resources and configuration, communications between ACC and MCC through interrupts or polling, subscription to receive hardware events, perform indirect hardware registers read write for debuggability, flash and physical layer interface (PHY) configuration, or perform system provisioning for different deployments of network interface device such as: storage node, tenant hosting node, microservices backend, compute node, or others.

Communication interface 625 can be utilized by a negotiation protocol and configuration protocol running between ACC control plane 622 and MCC control plane 632. Communication interface 625 can include a general purpose mailbox for different operations performed by packet processing circuitry 640. Examples of operations of packet processing circuitry 640 include issuance of Non-volatile Memory Express (NVMe) reads or writes, issuance of Non-volatile Memory Express over Fabrics (NVMe-oF^{™}) reads or writes, lookaside crypto Engine (LCE) (e.g., compression or decompression), Address Translation Engine (ATE) (e.g., input output memory management unit (IOMMU) to provide virtual-to-physical address translation), encryption or decryption, configuration as a storage node, configuration as a tenant hosting node, configuration as a compute node, provide multiple different types of services between different Peripheral Component Interconnect Express (PCIe) end points, or others.

Communication interface 625 can include one or more mailboxes accessible as registers or memory addresses. For communications from control plane 622 to control plane 632, communications can be written to the one or more mailboxes by control plane drivers 624. For communications from control plane 632 to control plane 622, communications can be written to the one or more mailboxes. Communications written to mailboxes can include descriptors which include message opcode, message error, message parameters, and other information. Communications written to mailboxes can include defined format messages that convey data.

Communication interface 625 can provide communications based on writes or reads to particular memory addresses (e.g., dynamic random access memory (DRAM)), registers, other mailbox that is written-to and read-from to pass commands and data. To provide for secure communications between control planes 622 and 632, registers and memory addresses (and memory address translations) for communications can be available only to be written to or read from by control planes 622 and 632 or cloud service provider (CSP) software executing on ACC 620 and device vendor software, embedded software, or firmware executing on MCC 630. Communication interface 625 can support communications between multiple different compute complexes such as from host 600 to MCC 630, host 600 to ACC 620, MCC 630 to ACC 620, baseboard management controller (BMC) to MCC 630, BMC to ACC 620, or BMC to host 600.

Packet processing circuitry 640 can be implemented using one or more of: application specific integrated circuit (ASIC), field programmable gate array (FPGA), processors executing software, or other circuitry. Control plane 622 and/or 632 can configure packet processing pipeline circuitry 640 or other processors to perform operations related to NVMe, NVMe-oF reads or writes, lookaside crypto Engine (LCE), Address Translation Engine (ATE), local area network (LAN), compression/decompression, encryption/decryption, or other accelerated operations.

Various message formats can be used to configure ACC 620 or MCC 630. In some examples, a P4 program can be compiled and provided to MCC 630 to configure packet processing circuitry 640. The following is a JSON configuration file that can be transmitted from ACC 620 to MCC 630 to get capabilities of packet processing circuitry 640 and/or other circuitry in packet processing device 610. More particularly, the file can be used to specify a number of transmit queues, number of receive queues, number of supported traffic classes (TC), number of available interrupt vectors, number of available virtual ports and the types of the ports, size of allocated memory, supported parser profiles, exact match table profiles, packet mirroring profiles, among others.

FIG. 6B depicts an example network interface device or packet processing device. In some examples, circuitry of network interface device can be configured to adjust timestamps to synchronize with timestamps of another device based on a bi-directionally transmitted timing signal, as described herein. In some examples, packet processing device 650 can be implemented as a network interface controller, network interface card, a host fabric interface (HFI), or host bus adapter (HBA), and such examples can be interchangeable. Packet processing device 650 can be coupled to one or more servers using a device interface or bus consistent with, e.g., Peripheral Component Interconnect Express (PCIe), Compute Express Link (CXL), or Double Data Rate (DDR). Packet processing device 650 may be embodied as part of a system-on-a-chip (SoC) that includes one or more processors, or included on a multichip package that also contains one or more processors.

Some examples of packet processing device 650 are part of an Infrastructure Processing Unit (IPU) or data processing unit (DPU) or utilized by an IPU or DPU. An xPU can refer at least to an Edge Processing Unit (EPU), IPU, DPU, GPU, GPGPU, or other processing units (e.g., accelerator devices). An edge processing unit (EPU) can include a network interface device that utilizes processors and accelerators (e.g., digital signal processors (DSPs), signal processors, or wireless specific accelerators for Virtualized Radio Access Networks (vRANs), cryptographic operations, compression/decompression, and so forth). An IPU or DPU can include a network interface with one or more programmable or fixed function processors to perform offload of operations that could have been performed by a CPU. The IPU or DPU can include one or more memory devices. In some examples, the IPU or DPU can perform virtual switch operations, manage storage transactions (e.g., compression, cryptography, virtualization), and manage operations performed on other IPUs, DPUs, servers, or devices.

Network interface 650 can include transceiver 652, transmit queue 656, receive queue 658, memory 660, host interface 662, DMA engine 664, processors 680, and system on chip (SoC) 682. Transceiver 652 can be capable of receiving and transmitting packets in conformance with the applicable protocols such as Ethernet as described in IEEE 802.3, although other protocols may be used. Transceiver 652 can receive and transmit packets from and to a network via a network medium (not depicted). Transceiver 652 can include PHY circuitry 654 and media access control (MAC) circuitry 655. PHY circuitry 654 can include encoding and decoding circuitry (not shown) to encode and decode data packets according to applicable physical layer specifications or standards. MAC circuitry 655 can be configured to assemble data to be transmitted into packets, that include destination and source addresses along with network control information and error detection hash values.

Processors 680 and/or system on chip (SoC) 682 can include one or more of a: processor, core, graphics processing unit (GPU), field programmable gate array (FPGA), application specific integrated circuit (ASIC), pipeline processing, or other programmable hardware device that allow programming of network interface 650. For example, a "smart network interface" can provide packet processing capabilities in the network interface using processors 680.

Processors 680 and/or system on chip 682 can include one or more packet processing pipelines that can be configured to perform match-action on received packets to identify packet processing rules and next hops using information stored in a ternary content-addressable memory (TCAM) tables or exact match tables in some embodiments. For example, match-action tables or circuitry can be used whereby a hash of a portion of a packet is used as an index to find an entry. Packet processing pipelines can perform one or more of: packet parsing (parser), exact match-action (e.g., small exact match (SEM) engine or a large exact match (LEM)), wildcard match-action (WCM), longest prefix match block (LPM), a hash block (e.g., receive side scaling (RSS)), a packet modifier (modifier), or traffic manager (e.g., transmit rate metering or shaping). For example, packet processing pipelines can implement access control list (ACL) or packet drops due to queue overflow.

Configuration of operation of processors 680 and/or system on chip 682, including its data plane, can be programmed based on one or more of: Protocol-independent Packet Processors (P4), Software for Open Networking in the Cloud (SONiC), Broadcom^{®} Network Programming Language (NPL), NVIDIA^{®} CUDA^{®}, NVIDIA^{®} DOCA^{™}, Infrastructure Programmer Development Kit (IPDK), among others.

As described herein, processors 680, system on chip 682, or other circuitry can be configured to adjust timestamps to synchronize with timestamps of another device based on a bi-directionally transmitted timing signal.

Packet allocator 674 can provide distribution of received packets for processing by multiple CPUs or cores using timeslot allocation described herein or RSS. When packet allocator 674 uses RSS, packet allocator 674 can calculate a hash or make another determination based on contents of a received packet to determine which CPU or core is to process a packet.

Interrupt coalesce 672 can perform interrupt moderation whereby network interface interrupt coalesce 672 waits for multiple packets to arrive, or for a time-out to expire, before generating an interrupt to host system to process received packet(s). Receive Segment Coalescing (RSC) can be performed by network interface 650 whereby portions of incoming packets are combined into segments of a packet. Network interface 650 can provide the coalesced packet to an application.

Direct memory access (DMA) engine 664 can copy a packet header, packet payload, and/or descriptor directly from host memory to the network interface or vice versa, instead of copying the packet to an intermediate buffer at the host and then using another copy operation from the intermediate buffer to the destination buffer.

Memory 660 can be any type of volatile or non-volatile memory device and can store any queue or instructions used to program network interface 650. Transmit queue 656 can include data or references to data for transmission by network interface. Receive queue 658 can include data or references to data that was received by network interface from a network. Descriptor queues 670 can include descriptors that reference data or packets in transmit queue 656 or receive queue 658. Host interface 662 can provide an interface with host device (not depicted). For example, host interface 662 can be compatible with PCI, PCI Express, PCI-x, CXL, Serial ATA, and/or USB compatible interface (although other interconnection standards may be used).

FIG. 7 depicts a system. In some examples, circuitry of system 700 can be configured to adjust timestamps to synchronize with timestamps of another device based on a bi-directionally transmitted timing signal, as described herein. System 700 includes processor 710, which provides processing, operation management, and execution of instructions for system 700. Processor 710 can include any type of microprocessor, central processing unit (CPU), graphics processing unit (GPU), XPU, processing core, or other processing hardware to provide processing for system 700, or a combination of processors. An XPU can include one or more of: a CPU, a graphics processing unit (GPU), general purpose GPU (GPGPU), and/or other processing units (e.g., accelerators or programmable or fixed function FPGAs). Processor 710 controls the overall operation of system 700, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 700 includes interface 712 coupled to processor 710, which can represent a higher speed interface or a high throughput interface for system components that needs higher bandwidth connections, such as memory subsystem 720 or graphics interface components 740, or accelerators 742. Interface 712 represents an interface circuit, which can be a standalone component or integrated onto a processor die. Where present, graphics interface 740 interfaces to graphics components for providing a visual display to a user of system 700. In one example, graphics interface 740 generates a display based on data stored in memory 730 or based on operations executed by processor 710 or both. In one example, graphics interface 740 generates a display based on data stored in memory 730 or based on operations executed by processor 710 or both.

Accelerators 742 can be a programmable or fixed function offload engine that can be accessed or used by a processor 710. For example, an accelerator among accelerators 742 can provide data compression (DC) capability, cryptography services such as public key encryption (PKE), cipher, hash/authentication capabilities, decryption, or other capabilities or services. In some cases, accelerators 742 can be integrated into a CPU socket (e.g., a connector to a motherboard or circuit board that includes a CPU and provides an electrical interface with the CPU). For example, accelerators 742 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 742 can provide multiple neural networks, CPUs, processor cores, general purpose graphics processing units, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models to perform learning and/or inference operations.

Memory subsystem 720 represents the main memory of system 700 and provides storage for code to be executed by processor 710, or data values to be used in executing a routine. Memory subsystem 720 can include one or more memory devices 730 such as read-only memory (ROM), flash memory, one or more varieties of random access memory (RAM) such as DRAM, or other memory devices, or a combination of such devices. Memory 730 stores and hosts, among other things, operating system (OS) 732 to provide a software platform for execution of instructions in system 700. Additionally, applications 734 can execute on the software platform of OS 732 from memory 730. Applications 734 represent programs that have their own operational logic to perform execution of one or more functions. Processes 736 represent agents or routines that provide auxiliary functions to OS 732 or one or more applications 734 or a combination. OS 732, applications 734, and processes 736 provide software logic to provide functions for system 700. In one example, memory subsystem 720 includes memory controller 722, which is a memory controller to generate and issue commands to memory 730. It will be understood that memory controller 722 could be a physical part of processor 710 or a physical part of interface 712. For example, memory controller 722 can be an integrated memory controller, integrated onto a circuit with processor 710.

Applications 734 and/or processes 736 can refer instead or additionally to a virtual machine (VM), container, microservice, processor, or other software. Various examples described herein can perform an application composed of microservices, where a microservice runs in its own process and communicates using protocols (e.g., application program interface (API), a Hypertext Transfer Protocol (HTTP) resource API, message service, remote procedure calls (RPC), or Google RPC (gRPC)). Microservices can communicate with one another using a service mesh and be executed in one or more data centers or edge networks. Microservices can be independently deployed using centralized management of these services. The management system may be written in different programming languages and use different data storage technologies. A microservice can be characterized by one or more of: polyglot programming (e.g., code written in multiple languages to capture additional functionality and efficiency not available in a single language), or lightweight container or virtual machine deployment, and decentralized continuous microservice delivery.

In some examples, OS 732 can be Linux^{®}, FreeBSD, Windows^{®} Server or personal computer, FreeBSD^{®}, Android^{®}, MacOS^{®}, iOS^{®}, VMware vSphere, openSUSE, RHEL, CentOS, Debian, Ubuntu, or any other operating system. The OS and driver can execute on a processor sold or designed by Intel^{®}, ARM^{®}, AMD^{®}, Qualcomm^{®}, IBM^{®}, Nvidia^{®}, Broadcom^{®}, Texas Instruments^{®}, among others.

In some examples, OS 732, a system administrator, and/or orchestrator can configure circuitry to adjust timestamps to synchronize with timestamps of another device based on a bi-directionally transmitted timing signal, as described herein.

While not specifically illustrated, it will be understood that system 700 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 700 includes interface 714, which can be coupled to interface 712. In one example, interface 714 represents an interface circuit, which can include standalone components and integrated circuitry. In one example, multiple user interface components or peripheral components, or both, couple to interface 714. Network interface 750 provides system 700 the ability to communicate with remote devices (e.g., servers or other computing devices) over one or more networks. Network interface 750 can include an Ethernet adapter, wireless interconnection components, cellular network interconnection components, USB (universal serial bus), or other wired or wireless standards-based or proprietary interfaces. Network interface 750 can transmit data to a device that is in the same data center or rack or a remote device, which can include sending data stored in memory. Network interface 750 can receive data from a remote device, which can include storing received data into memory. In some examples, packet processing device or network interface device 750 can refer to one or more of: a network interface controller (NIC), a remote direct memory access (RDMA)-enabled NIC, SmartNIC, SuperNIC with an accelerator, router, switch, forwarding element, infrastructure processing unit (IPU), EPU, or data processing unit (DPU). An example IPU or DPU is described with respect to FIG. 6A and/or 6B.

In one example, system 700 includes one or more input/output (I/O) interface(s) 760. I/O interface 760 can include one or more interface components through which a user interacts with system 700. Peripheral interface 770 can include any hardware interface not specifically mentioned above. Peripherals refer generally to devices that connect dependently to system 700.

In one example, system 700 includes storage subsystem 780 to store data in a nonvolatile manner. In one example, in certain system implementations, at least certain components of storage 780 can overlap with components of memory subsystem 720. Storage subsystem 780 includes storage device(s) 784, which can be or include any conventional medium for storing large amounts of data in a nonvolatile manner, such as one or more magnetic, solid state, or optical based disks, or a combination. Storage 784 holds code or instructions and data 786 in a persistent state (e.g., the value is retained despite interruption of power to system 700). Storage 784 can be generically considered to be a "memory," although memory 730 is typically the executing or operating memory to provide instructions to processor 710. Whereas storage 784 is nonvolatile, memory 730 can include volatile memory (e.g., the value or state of the data is indeterminate if power is interrupted to system 700). In one example, storage subsystem 780 includes controller 782 to interface with storage 784. In one example controller 782 is a physical part of interface 714 or processor 710 or can include circuits or logic in both processor 710 and interface 714.

A volatile memory can include memory whose state (and therefore the data stored in it) is indeterminate if power is interrupted to the device. A non-volatile memory (NVM) device can include a memory whose state is determinate even if power is interrupted to the device.

In some examples, system 700 can be implemented using interconnected compute platforms of processors, memories, storages, network interfaces, and other components. High speed interconnects can be used such as: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be copied or stored to virtualized storage nodes or accessed using a protocol such as NVMe over Fabrics (NVMe-oF) or NVMe (e.g., a non-volatile memory express (NVMe) device can operate in a manner consistent with the Non-Volatile Memory Express (NVMe) Specification, revision 1.3c, published on May 24, 2018 ("NVMe specification") or derivatives or variations thereof).

Communications between devices can take place using a network that provides die-to-die communications; chip-to-chip communications; circuit board-to-circuit board communications; and/or package-to-package communications.

In an example, system 700 can be implemented using interconnected compute platforms of processors, memories, storages, network interfaces, and other components. High speed interconnects can be used such as PCIe, Ethernet, or optical interconnects (or a combination thereof).

Examples herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, a blade includes components common to conventional servers, including a main printed circuit board (main board) providing internal wiring (e.g., buses) for coupling appropriate integrated circuits (ICs) and other components mounted to the board.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner, or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission, or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. For example, descriptions using the terms "connected" and/or "coupled" may indicate that two or more elements are in direct physical or electrical contact. The term "coupled," however, may also mean that two or more elements are not in direct contact, but yet still co-operate or interact.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal (e.g., active-low or active-high). The terms "follow" or "after" can refer to immediately following or following after some other event or events. Other sequences of operations may also be performed according to alternative embodiments. Furthermore, additional operations may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to be present. Additionally, conjunctive language such as the phrase "at least one of X, Y, and Z," unless specifically stated otherwise, should also be understood to mean X, Y, Z, or any combination thereof, including "X, Y, and/or Z."'

Illustrative examples of the devices, systems, and methods disclosed herein are provided below. An embodiment of the devices, systems, and methods may include any one or more, and any combination of, the examples described below.

Some examples include synchronizing network interface controllers (NICs) within a system, by a first NIC and a second NIC establishing a common time reference based on a two-way latency between the first NIC and the second NIC. The two-way latency can be based on a periodic pulse signal sent from the first NIC to the second NIC and returned by the second NIC to the first NIC. The first NIC can determine an expected time of the pulse to arrive from the second NIC and the expected time can be determined, at least in part, by the two-way transmission latency. The first NIC can send a drift adjustment signal to the second NIC based on the difference between the expected arrival time and the actual arrival time. The second NIC can change the egress time of subsequent time pulses based on the received drift adjustment. The expected time of the pulse to arrive can be based on receiving a transmission time and adding one-way latency value to the transmission time.

The two-way latency from the second NIC to the first NIC can be based on: determining a round trip time (RTT) between the first NIC and the second NIC; determining a loopback time for pulse processing on one or more of the NICs; calculating a one-way latency from the second NIC to the first NIC by subtracting the loopback time from the RTT and halving the result.

Example 1 includes an apparatus comprising: a first network interface controller comprising a first network interface, first timer, and a first signal transceiver, wherein the first timer is to generate a first timing signal based on Institute of Electrical and Electronics Engineers (IEEE) 1588 Precision Time Protocol (PTP) timing signals and circuitry to reduce offset between the first timing signal of the first network interface controller and a second timing signal of a second network interface controller based on a first signal transmitted over a communication line from the first signal transceiver to the second network interface controller and also based on the first signal transmitted from the second network interface controller back to the first network interface controller over the communication line, wherein the first timer is to generate the first signal based on the first timing signal.

Example 2 includes one or more examples, wherein the circuitry is to reduce offset between the first and second timers based on transmit and receipt time stamps associated with transmission of the first signal to the second network interface controller and transmission of the first signal back to the first network interface controller.

Example 3 includes one or more examples and includes a memory, wherein: the memory is to store a first transmit timestamp associated with transmission of the first signal to the second network interface controller, a first receipt timestamp of receipt of the first signal at the second network interface controller, a second transmit timestamp associated with transmission of the first signal back to the first network interface controller, a second receipt timestamp of receipt of the first signal at the first network interface controller and the circuitry is to reduce offset between the first and second timers based on the first transmit timestamp, the first receipt timestamp, the second transmit timestamp, and the second receipt timestamp.

Example 4 includes one or more examples, wherein the offset is based on a delay in a path through the first and second network interface controllers and the communication line.

Example 5 includes one or more examples, wherein the delay is based on one or more of: flip flop traversal, input buffer delay, and output buffer delay.

Example 6 includes one or more examples, wherein the first signal comprises a pulse per second (1PPS) signal.

Example 7 includes one or more examples, wherein the circuitry is to reduce offset between the first and second timers based on execution of Linux^{®} ts2phc.

Example 8 includes one or more examples, wherein the circuitry is to reduce offset between the first and second timers during transmission of data from the first network interface controller to the second network interface controller and outside of a debug mode.

Example 9 includes one or more examples, and includes the second network interface controller, wherein the second network interface controller comprises a second network interface, the second timer, and a second signal transceiver.

Example 10 includes one or more examples, wherein the first network interface controller is to synchronize the first timer with signals based on Institute of Electrical and Electronics Engineers (IEEE) 1588 Precision Time Protocol (PTP) or Global Navigation Satellite Systems (GNSS) signals.

Example 11 includes one or more examples, and includes a method that includes: reducing offset between first and second timers based on a first duration associated with transmitting a first signal over a communication line from a first circuitry to a second circuitry and also based on a second duration associated with transmitting the first signal back to the first circuitry over the communication line.

Example 12 includes one or more examples, and includes determining the first duration based on timestamps measured at transmission of the first signal at the first circuitry and receipt of the first signal at the second circuitry and determining the second duration based on timestamps measured at transmission of the first signal at the second circuitry back to the first circuitry and receipt of the first signal at the first circuitry.

Example 13 includes one or more examples, wherein the offset is based on a delay in a path through the first circuitry and the second circuitry and the communication line and wherein the delay is based on one or more of: flip flop traversal, input buffer delay, and output buffer delay.

Example 14 includes one or more examples, wherein the first signal comprises a pulse per second (1PPS) signal.

Example 15 includes one or more examples, and includes reducing offset between the first and second timers based on execution of Linux^{®} ts2phc.

Example 16 includes one or more examples, and includes reducing offset between the first and second timers during transmission of data from the first circuitry to the second circuitry and outside of a debug mode.

Example 17 includes one or more examples, and includes at least one non-transitory computer-readable medium comprising instructions stored thereon, that if executed by one or more processors, cause the one or more processors to: reduce offset between first and second timers based on a first duration associated with transmitting a first signal over a communication line from a first circuitry to a second circuitry and also based on a second duration associated with transmitting the first signal back to the first circuitry over the communication line.

Example 18 includes one or more examples, and includes instructions stored thereon, that if executed by one or more processors, cause the one or more processors to: determine the first duration based on timestamps measured at transmission of the first signal at the first circuitry and receipt of the first signal at the second circuitry determine the second duration based on timestamps measured at transmission of the first signal at the second circuitry back to the first circuitry and receipt of the first signal at the first circuitry.

Example 19 includes one or more examples, wherein the offset is based on a delay in a path through the first circuitry and the second circuitry and the communication line and wherein the delay is based on one or more of: flip flop traversal, input buffer delay, and output buffer delay.

Example 20 includes one or more examples, wherein the reducing offset between the first and second timers is based on execution of Linux^{®} ts2phc.

## Claims

1. An apparatus comprising:
a first network interface controller comprising a first network interface, first timer, and a first signal transceiver, wherein the first timer is to generate a first timing signal based on Institute of Electrical and Electronics Engineers (IEEE) 1588 Precision Time Protocol (PTP) timing signals and
circuitry to reduce offset between the first timing signal of the first network interface controller and a second timing signal from a second timer of a second network interface controller based on a first signal transmitted over a communication line from the first signal transceiver to the second network interface controller and also based on the first signal transmitted from the second network interface controller back to the first network interface controller over the communication line, wherein the first timer is to generate the first signal based on the first timing signal.

2. The apparatus of claim 1, wherein the offset is based on a delay in a path through the first and second network interface controllers and the communication line and wherein the delay is based on one or more of: flip flop traversal, input buffer delay, and output buffer delay.

3. The apparatus of claim 1, wherein the first signal comprises a pulse per second (1PPS) signal.

4. The apparatus of claim 1, wherein the circuitry is to reduce offset between the first and second timers based on execution of Linux^{®} ts2phc.

5. The apparatus of claim 1, wherein the circuitry is to reduce offset between the first and second timers during transmission of data from the first network interface controller to the second network interface controller and outside of a debug mode.

6. The apparatus of claim 1, comprising the second network interface controller, wherein the second network interface controller comprises a second network interface, the second timer, and a second signal transceiver.

7. The apparatus of claim 1, wherein the first network interface controller is to synchronize the first timer with signals based on Institute of Electrical and Electronics Engineers (IEEE) 1588 Precision Time Protocol (PTP) or Global Navigation Satellite Systems (GNSS) signals.

8. The apparatus of claim 1, wherein:
the circuitry is to reduce offset between the first and second timers based on transmit and receipt time stamps associated with transmission of the first signal to the second network interface controller and transmission of the first signal back to the first network interface controller.

9. The apparatus of any of claims 1-8, comprising a memory, wherein:
the memory is to store a first transmit timestamp associated with transmission of the first signal to the second network interface controller, a first receipt timestamp of receipt of the first signal at the second network interface controller, a second transmit timestamp associated with transmission of the first signal back to the first network interface controller, a second receipt timestamp of receipt of the first signal at the first network interface controller and
the circuitry is to reduce offset between the first and second timers based on the first transmit timestamp, the first receipt timestamp, the second transmit timestamp, and the second receipt timestamp.

10. A method comprising:
reducing offset between first and second timers based on a first duration associated with transmitting a first signal over a communication line from a first circuitry to a second circuitry and also based on a second duration associated with transmitting the first signal back to the first circuitry over the communication line.

11. The method of claim 10, comprising:
reducing offset between the first and second timers based on execution of Linux^{®} ts2phc.

12. The method of claim 10, comprising:
reducing offset between the first and second timers during transmission of data from the first circuitry to the second circuitry and outside of a debug mode.

13. The method of claim 10, comprising:
determining the first duration based on timestamps measured at transmission of the first signal at the first circuitry and receipt of the first signal at the second circuitry and
determining the second duration based on timestamps measured at transmission of the first signal at the second circuitry back to the first circuitry and receipt of the first signal at the first circuitry.

14. The method of any of claims 10-13, wherein the offset is based on a delay in a path through the first circuitry and the second circuitry and the communication line and wherein the delay is based on one or more of: flip flop traversal, input buffer delay, and output buffer delay.

15. Machine-readable storage including machine-readable instructions, when executed, to implement a method or realize an apparatus as claimed in any preceding claim.
